# EUROPEAN PATENT SPECIFICATION

(11) **EP 4 090 722 B1**
(45) Date of publication and mention of the grant of the patent: **05.03.2025**
(21) Application number: 21741313.7
(22) Date of filing: 19.01.2021
(51) Int. Cl.: C10M 137/12, C10M 137/14, C10M 137/10, C10M 169/04, C10N 30/06, C10N 40/04, C10N 40/08, C10N 40/25

(54) **FRICTION MODIFIER COMPOUNDS AND RELATED COMPOSITIONS AND METHODS**
REIBUNGSMODIFIZIERUNGSVERBINDUNGEN; VERWANDTE ZUSAMMENSETZUNGEN UND VERFAHREN
COMPOSÉS MODIFICATEURS DE FROTTEMENT ET COMPOSITIONS ET PROCÉDÉS ASSOCIÉS

(30) Priority: 17.01.2020 US 202062962562 P
(43) Date of publication of application: 23.11.2022
(73) Proprietor: Afton Chemical Corporation, Richmond, VA 23219 (US)
(72) Inventor: BAKER, John, Marshall, Bracknell Berkshire RG12 8AL (GB); CAIN, Nathaniel, Richmond, VA 23225 (US)
(74) Representative: Novagraaf Group
(86) International application number: PCT/US2021/013948
(87) International publication number: WO 2021/146706

(56) References cited:
- WO-A1-2019/155739
- WO-A1-2019/163509
- WO-A1-2019/230412
- CN-A- 110 499 204
- JP-A- 2005 002 214
- JP-A- 2015 502 446
- JP-A- 2019 137 829
- US-A1- 2005 143 266
- US-A1- 2007 225 181
- US-A1- 2014 162 919

## Description

### BACKGROUND OF THE DISCLOSURE

Various chemical components can be added to a lubricant to promote desired properties of machine components. A friction modifier may be added to a lubricant to promote desired friction properties. An antiwear compound may be added to a lubricant to promote reduced wear.

WO 2019/1623509 A1 describes a lubricant oil composition that comprises a base oil, a specific phosphorus compound and zinc thiophosphate and has good abrasion resistance and high oxidative stability; a method for manufacturing the lubricant oil composition; and a driving device using the lubricant oil composition. WO 2019/155739 A1 describes a lubricating oil additive composition including: an anti-wear agent indicated by general formula (1) and an extreme pressure agent such as a compound indicated by general formula (2).

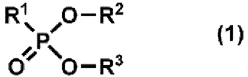

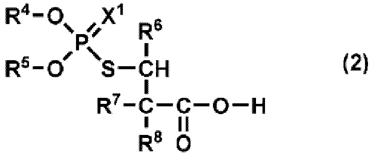

Wherein in formula (1), R1 indicates a monovalent hydrocarbon group and R2 and R3 each independently indicate a hydrogen atom or an alkyl group. In formula (2), R4 and R5 each independently indicate a monovalent hydrocarbon group, R6 indicates a hydrogen atom or a carboxyl group, R7 and R8 each independently indicate a hydrogen atom or an alkyl group, and X1 indicates a sulfur atom or an oxygen atom.

There remains a need, however, for lubricant additive compositions and lubricant compositions that promote improved reduced friction and antiwear performance over time.

### BRIEF SUMMARY OF THE DISCLOSURE

Lubricant additive compositions, lubricant compositions and related methods are provided. A lubricant additive composition can include a friction modifier compound and an antiwear compound as provided herein. A lubricant composition can include a base oil, a friction modifier compound, and an antiwear compound as provided herein. The friction modifier compounds as provided herein are phosphonate compounds that include a carbon-to-phosphorus (C-P) bond.

The lubricant additive and lubricant compositions provide a proper balance of reduced friction and increased antiwear performance over time. The lubricant additive composition as provided herein may be utilized in or added to a variety of finished fluids, including gear fluids.

According to one aspect, a lubricant additive composition is provided that includes
a) a friction modifier compound of formula (I): 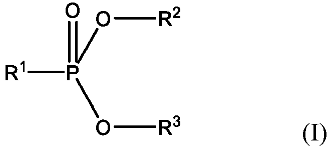 wherein
   R¹ is straight, branched, saturated, or unsaturated C₆-C₂₄ hydrocarbyl; and
   R² is an optionally substituted C₂-C₈ hydrocarbyl, optionally substituted phenyl, or optionally substituted ethyl;
   R³ is hydrogen, an optionally substituted C₂-C₈ hydrocarbyl, optionally substituted phenyl, or optionally substituted ethyl; and
b) an antiwear compound;
wherein the antiwear compound is a phosphorus containing compound of formula (II): 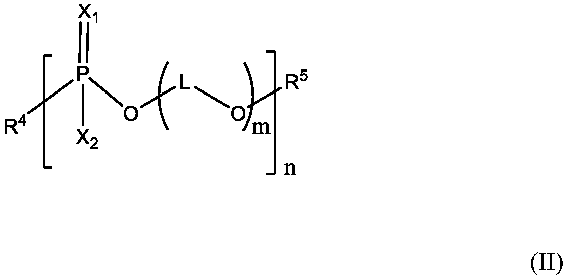
or a tribologically acceptable salt thereof,
wherein:
   each X₁ is independently oxygen (O) or sulfur (S);
   each X₂ is independently -OR", -OH, -SR", -SR‴C(O)OH, and -SH;
   R⁴ is -OR", -OH, or H;
   R⁵ is -R";
   each R" is independently a C₁ to C₁₈ hydrocarbyl chain;
   each R‴ is independently a C₁ to C₃ branched or linear alkyl chain;
   n is 1, 2, or 3;
   m is 0 when n is 1;
   m is 1 when n is 2 or 3; and
   L is a linker selected from the divalent group consisting of acyclic C₁-C₅ hydrocarbon and cyclic C₃-C₁₀ hydrocarbon.

According to one embodiment, each of R² and R³ is independently ethyl, optionally substituted phenyl, or a linear, branched or cyclic C₃-C₄ alkyl. According to one embodiment, R¹ is straight C₁₆-C₁₉ hydrocarbyl.

The antiwear compounds as provided herein exclude phosphonates and, as such, do not include organic compounds characterized by a carbon-to-phosphorus (C-P) bond. According to the invention, the antiwear compound is an ashless phosphorus-containing compound. In an embodiment, the ashless phosphorus-containing compound can include a phosphite, a phosphate, a thiophosphate, a dithiophosphate, or any combination thereof.

The ashless phosphorus-containing compound contains at least one phosphorus center. In one embodiment, the ashless phosphorus-containing compound can contain more than one phosphorus center, such as at least two phosphorus centers, at least three phosphorus centers, or at least four phosphorus centers.

According to one embodiment, the friction modifier is a diethyl octadecylphosphonate, dipropyl octadecylphosphonate, dibutyl octadecylphosphonate, diisopropyl octadecylphosphonate, and diphenyl octadecylphosphonate; and the antiwear compound is a phosphorus containing compound, a sulfur containing compound, a nitrogen containing compound, or a combination thereof.

According to one embodiment, the friction modifier is dibutyl octadecylphosphonate; and the antiwear compound is a phosphorous containing compound. According to one embodiment, the lubricant additive composition includes a solubility enhancer. According to one embodiment, the lubricant additive composition further includes one or more of an antioxidant, a solubility enhancer, an additional antiwear agent, a corrosion inhibitor, a detergent, an extreme pressure agent, a dispersant, a viscosity index improver, and an additional friction modifier.

According to another aspect, a lubricant composition is provided that includes a major amount base oil or grease and a minor amount of the lubricant additive composition as provided herein. The resulting lubricant composition provides a balance of reduced friction and antiwear performance.

According to one aspect, a method of lubricating moving metal surfaces of a machine part is provided. The method includes the step of lubricating the surfaces with a lubricant composition as provided herein. According to one embodiment, the machine part is one or more of an industrial gear, a windturbine gear, an axle, a differential, an engine, a crankshaft, a transmission, a clutch, a hydraulic apparatus, a slideway apparatus, and a turbine. According to one embodiment, antiwear performance is maintained in an aged lubricant composition relative to a baseline, fresh lubricant composition when tested according to ASTM D4172. According to one embodiment, antiwear performance is improved relative to a lubricant composition comprising a friction modifier compound other than a friction modifier compound of formula (I): 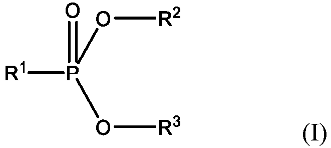 wherein
R¹ is straight, branched, saturated, or unsaturated C₆-C₂₄ hydrocarbyl;
R² is an optionally substituted C₂-C₈ hydrocarbyl, optionally substituted phenyl, or optionally substituted ethyl; and
R³ is hydrogen, an optionally substituted C₂-C₈ hydrocarbyl, optionally substituted phenyl, or optionally substituted ethyl.

The lubricant compositions and lubricant additive concentrates as provided herein are also particularly suitable for a wide variety of gear and/or transmission applications including, but not limited to, automotive gears, industrial gears, stationary gears, rear axles, limited slip differentials, conventional differentials, and/or automatic and manual transmissions. Further, such compositions and concentrates are suitable for use in multi-plate differentials, cone clutch differentials, torsen differentials, and/or dog clutch differentials.

### DETAILED DESCRIPTION OF EMBODIMENTS

The present disclosure will now be described more fully hereinafter with reference to exemplary embodiments thereof. These exemplary embodiments are described so that this disclosure will be thorough and complete, and will fully convey the scope of the disclosure to those skilled in the art. Indeed, the present disclosure may be embodied in many different forms and should not be construed as limited to the embodiments set forth herein; rather, these embodiments are provided so that this disclosure will satisfy applicable legal requirements.

As used herein, the term "tribologically acceptable salt" includes amine salt alternatives.

As used herein, the terms "hydrocarbyl substituent," "hydrocarbyl group," or "hydrocarbyl" are used in an ordinary sense, which are well-known to those skilled in the art. Specifically, the terms "hydrocarbyl substituent," "hydrocarbyl group," or "hydrocarbyl" refer to a group having a carbon atom directly attached to the remainder of a molecule and having a predominantly hydrocarbon character. Examples of hydrocarbyl groups include:
(1) hydrocarbon substituents, that is, aliphatic (e.g., alkyl or alkenyl), alicyclic (e.g., cycloalkyl, cycloalkenyl) substituents, and aromatic-, aliphatic-, and alicyclic-substituted aromatic substituents, as well as cyclic substituents wherein the ring is completed through another portion of the molecule (e.g., two substituents together form an alicyclic radical); and
(2) substituted hydrocarbon substituents, that is, substituents containing non-hydrocarbon groups which, in the context of the description herein, do not alter the predominantly hydrocarbon substituent (e.g., halo (especially chloro and fluoro), hydroxy, alkoxy, mercapto, alkylmercapto, nitro, nitroso, and sulfoxy).

As used herein, the terms "oil composition," "lubrication composition," "lubricating composition," "lubricating oil composition," "lubricating oil," "lubricant composition," "fully formulated lubricant composition," and "lubricant" are considered synonymous, fully interchangeable terminology referring to the finished lubrication product comprising a major amount of a base oil plus a minor amount of an lubricant concentrate or lubricant additive composition.

As used herein, the terms "lubricant concentrate" and "lubricant additive composition" are considered synonymous, fully interchangeable terminology referring to an additive that is introduced to a base oil to form a finished lubrication product.

As used herein, the term "solubility enhancer" is a compound that improves the solubility of any of the friction modifier compounds.

As used herein, the term "base oil" refers to oils categorized by the American Petroleum Institute (API) category groups Group I-V oils as well as animal oils, vegetable oils (e.g. castor oil and lard oil), petroleum oils, mineral oils, synthetic oils, and oils derived from coal or shale.

Wear on a machine component can lead to material failure or loss of functionality, and such wear can take many forms.

A lubricant composition can protect against wear by forming a lubricant layer between the machine component and the solid surface. As the thickness of the lubricant layer increases, friction is reduced. Metal surfaces at the microscopic level, however, are rough surfaces with imperfections called asperities. The lubricant layer may be thick enough to separate the surfaces, but not thick enough to separate all the asperities between the two surfaces. Abrasive wear can occurs when an asperity contacts an opposing surface and breaks off itself, or gouges out or cracks the opposing surface.

To help reduce contact between opposing surfaces, an antiwear compound can be added to the lubricant composition. The antiwear compound can promote the formation of a chemical film, referred to as a tribofilm. The thickness and roughness of the tribofilm can impact both friction and wear protection.

In addition, a friction modifier can be added to the lubricant composition. The friction modifier can assist in reducing the coefficient of friction that the bare opposing surfaces would otherwise have had. A reduction in the coefficient of friction can result in a reduction of stress on the opposing surfaces. However, the inventors have discovered that the friction modifier may impact the thickness or the smoothness of the tribofilm, resulting in a decrease over time of the wear protection properties that the antiwear compound would otherwise provide.

The present disclosure provides lubricant concentrates, lubricant compositions and related methods that unexpectedly maintain or improve friction while maintaining or even improving wear protection over time. The combination of an antiwear compound with a particular class of a friction modifier described herein has been found to not only reduce the friction but also maintain or even improve wear protection.

### FRICTION MODIFIER COMPOUND

As discussed above, the friction modifier compound described herein is combined with an antiwear compound to provide reduced friction and extended protection against wear. Without being limited to a particular theory, it is believed that the friction modifier compound can help regulate formation of a smoother tribofilm which improves protection against wear.

According to the invention, the friction modifier compound includes one or more compounds of formula (I): 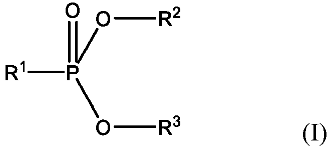 wherein
R¹ is straight, branched, saturated, or unsaturated C₆-C₂₄ hydrocarbyl; and
R² is an optionally substituted C₂-C₈ hydrocarbyl, optionally substituted phenyl, or optionally substituted ethyl;
R³ is hydrogen, an optionally substituted C₂-C₈ hydrocarbyl, optionally substituted phenyl, or optionally substituted ethyl.

According to an embodiment, the compounds of formula (I) include monoesters of phosphonic acid. Suitable monoesters include, but are not limited to, any of the monoesters of C₆-C-₂₄ hydrocarbyl (such as linear and branched hexyl, heptyl, octyl, nonyl, decyl, undecyl, dodecyl, tridecyl, tetradecyl, pentadecyl, hexadecyl, heptadecyl, octadecyl, nonadecyl, eicosanyl, etc.) phosphonic acid wherein the alcohol portion of the monoester is derived from an alcohol such as phenol, ethanol and linear, branched and cyclic C₃-C₄ hydrocarbon (such n-propanol, 2-propanol, cyclopropanol, n-butanol, 2-butanol, sec-butanol, tert-butanol, or cyclobutanol) According to one embodiment, the hydrocarbon of the alcohol does not contain a heteroatom. For example, the following monoester 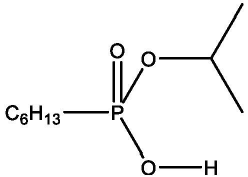 is a monoester of C₆-hydrocarbyl (i.e., a linear or a branched hexyl) phosphonic acid in which the alcohol is derived from 2-propanol. The skilled artisan can envision how each and every C₆-C-₂₄ hydrocarbyl phosphonic acid can form a monoester with any of the alcohols described above.

According to a particular embodiment, the friction modifier compound can include one or more compounds of formula (I): 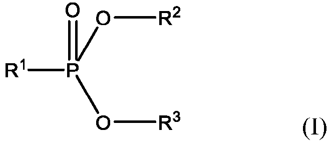 wherein
R¹ is straight, branched, saturated, or unsaturated C₆-C₂₄ hydrocarbyl and each of R² and R³ is independently an optionally substituted C₂-C₈ hydrocarbyl, optionally substituted phenyl, or optionally substituted ethyl.

According to one embodiment, R¹ is a saturated hydrocarbyl group that can be straight or branched. According to a particular embodiment, R¹ does not contain a heteroatom.

According to particular embodiment, R¹ has at least 8 carbons, or at least 10 carbons, or at least 12 carbons, or at least 14 carbons, or even at least 16 carbons. According to a particular embodiment, R¹ has no greater than 22 carbons, or no greater than 20 carbons, or no greater than 18 carbons. For example, R¹ has 10 to 22 carbons, or 14 to 20 carbons. According to a particular embodiment, the C₆-C₂₄ hydrocarbyl of R¹ does not contain a heteroatom. In a particular embodiment, each of R² and R³ can individually be a C₂-C₈ hydrocarbyl. For example, each of R² and R³ can independently be a linear or branched C₂-C₈ hydrocarbyl. As another example, each of R² and R³ can independently be a linear or branched C₃-C₄ hydrocarbyl.

As a particular example, each of R² and R³ can independently be a linear or branched C₂ hydrocarbyl group. The C₂ hydrocarbyl group can be an ethyl group.

As a particular example, each of R² and R³ can independently be a linear or branched C₃ hydrocarbyl group. The C₃ hydrocarbyl group can be a propyl group, such as n-propyl, isopropyl, or cyclopropyl.

As a particular example, each of R² and R³ can independently be a linear or branched C₄ hydrocarbyl group. The C₄ hydrocarbyl group can be a butyl group, such as n-butyl, isobutyl, tertbutyl, or cyclobutyl.

As a particular example, each of R² and R³ can independently be a phenyl group.

According to one embodiment, each of R² and R³ does not contain a heteroatom.

In other embodiments, one of R² and R³ is an optionally substituted ethyl and the other is an optionally substituted linear, branched or cyclic C₂-C₈ hydrocarbyl. In other embodiments, one of R² and R³ is an optionally substituted ethyl and the other is an optionally substituted linear, branched or cyclic C₂-C₈ hydrocarbyl wherein the hydrocarbyl does not contain a heteroatom.

According to one embodiment, one of R² and R³ is an optionally substituted phenyl and the other is an optionally substituted ethyl. In other embodiments, one R² and R³ is an optionally substituted phenyl and the other is an optionally substituted linear, branched or cyclic C₂-C₈ hydrocarbyl. In other embodiments, one R² and R³ is an optionally substituted phenyl and the other is an optionally substituted linear, branched or cyclic C₂-C₈ hydrocarbyl wherein the hydrocarbyl does not contain a heteroatom.

According to one embodiment, R² and R³ are the same. According to another embodiment, R² and R³ are different. According to one embodiment, the C₂-C₈ hydrocarbyl of R² and R³ does not contain a heteroatom.

According to one embodiment, R¹ is a C₁₅-C₁₈, C₁₅-C₁₉ , C₁₅-C₂₀, C₁₆-C₁₈, C₁₆-C₁₉, or C₁₆-C₂₀ hydrocarbyl and each of R² and R³ is independently a phenyl, or a linear, branched or cyclic C₂-C₈ hydrocarbyl that may be optionally substituted.

According to one embodiment, R¹ is a saturated straight or branched C₁₅-C₁₈, C₁₅-C₁₉, C₁₅-C₂₀, C₁₆-C₁₈, C₁₆-C₁₉, or C₁₆-C₂₀ hydrocarbyl and each of R² and R³ is independently an, optionally substituted, phenyl.

According to one embodiment, R¹ is a saturated, straight or branched C₁₅-C₁₈, C₁₅-C₁₉, C₁₅-C₂₀, C₁₆-C₁₈, C₁₆-C₁₉, or C₁₆-C₂₀ hydrocarbyl and each of R² and R³ is independently an optionally substituted linear, branched or cyclic C₃-C₄ hydrocarbyl.

According to one embodiment, R¹ is a saturated straight or branched C₁₅-C₁₈, C₁₅-C₁₉, C₁₅-C₂₀, C₁₆-C₁₈, C₁₆-C₁₉, or C₁₆-C₂₀ hydrocarbyl and each of R² and R³ is independently an optionally substituted linear or branched C₃-C₄ hydrocarbyl.

According to one embodiment, R¹ is a saturated straight or branched C₁₅-C₁₈, C₁₅-C₁₉, C₁₅-C₂₀, C₁₆-C₁₈, C₁₆-C₁₉, or C₁₆-C₂₀ hydrocarbyl and each of R² and R³ is independently an optionally substituted cyclic C₃-C₄ hydrocarbyl.

According to one embodiment, R¹ is a saturated straight or branched C₁₅-C₁₈, C₁₅-C₁₉, C₁₅-C₂₀, C₁₆-C₁₈, C₁₆-C₁₉, or C₁₆-C₂₀ hydrocarbyl and each of R² and R³ is independently an optionally substituted linear or branched C₄ hydrocarbyl.

According to one embodiment, R¹ is a saturated straight or branched C₁₅-C₁₈, C₁₅-C₁₉, C₁₅-C₂₀, C₁₆-C₁₈, C₁₆-C₁₉, or C₁₆-C₂₀ hydrocarbyl and each of R² and R³ is independently an optionally substituted linear or branched C₃ hydrocarbyl.

According to one embodiment, R¹ is a saturated straight or branched C₁₅-C₁₈, C₁₅-C₁₉, C₁₅-C₂₀, C₁₆-C₁₈, C₁₆-C₁₉, or C₁₆-C₂₀ hydrocarbyl and each of R² and R³ is independently an optionally substituted linear C₂ hydrocarbyl.

### DIESTERS

According to another embodiment, the compounds of formula (I) include diesters of phosphonic acid. Suitable examples of diesters of phosphonic acid include, but are not limited to, any of the diesters of C₆-C-₂₄ hydrocarbyl (such as linear and branched hexyl, heptyl, octyl, nonyl, decyl, undecyl, dodecyl, tridecyl, tetradecyl, pentadecyl, hexadecyl, heptadecyl, octadecyl, nonadecyl, eicosanyl, etc.) phosphonic acid wherein the alcohol portions of the diester are independently derived from any of phenol, ethanol and linear, branched and cyclic C₃-C₄ hydrocarbon (such n-propanol, 2-propanol, cyclopropanol, n-butanol, 2-butanol, sec-butanol, tert-butanol, or cyclobutanol). According to one embodiment, the hydrocarbon of the alcohol does not contain a heteroatom. For example, the following diester 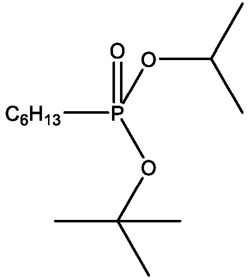 is a diester of C₆-hydrocarbyl (i.e., a linear or a branched hexyl) phosphonic acid in which the two alcohols are derived from 2-propanol and tert-butanol. The skilled artisan can envision how each and every C₆-C-₂₄ hydrocarbyl phosphonic acid can form a diester with any of the alcohols described above.

According to one embodiment, the one or more friction modifier compounds includes those as fully described, for example, in U.S. Patent No. 10,329,511, U.S. Patent No. 9,944,879, U.S. Patent No. 9,481,696, U.S. Patent No. 9,518,242, and U.S. Patent No. 9,885,003.

According to one embodiment, the compound of formula (I) is selected from:

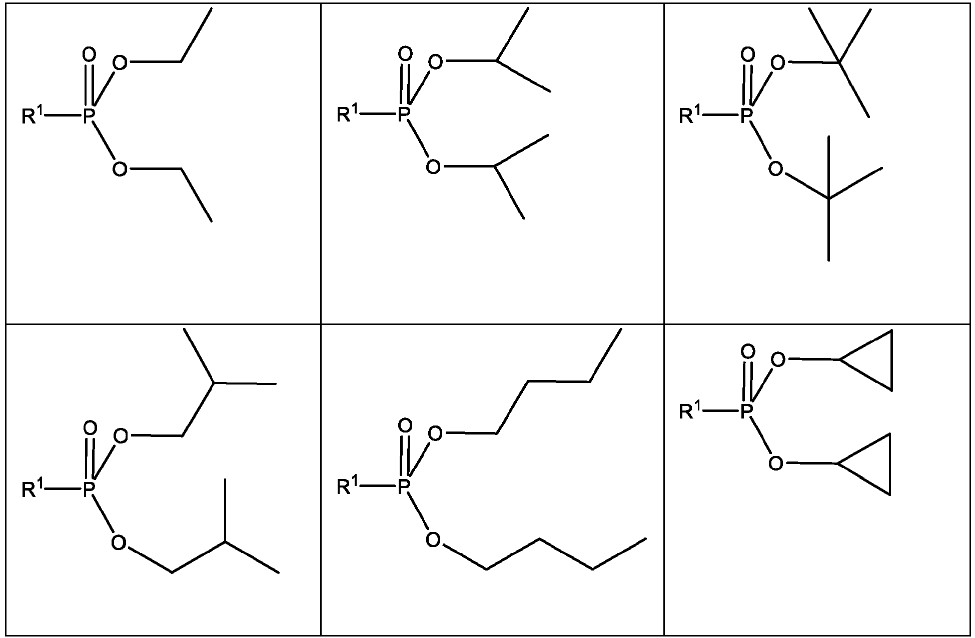

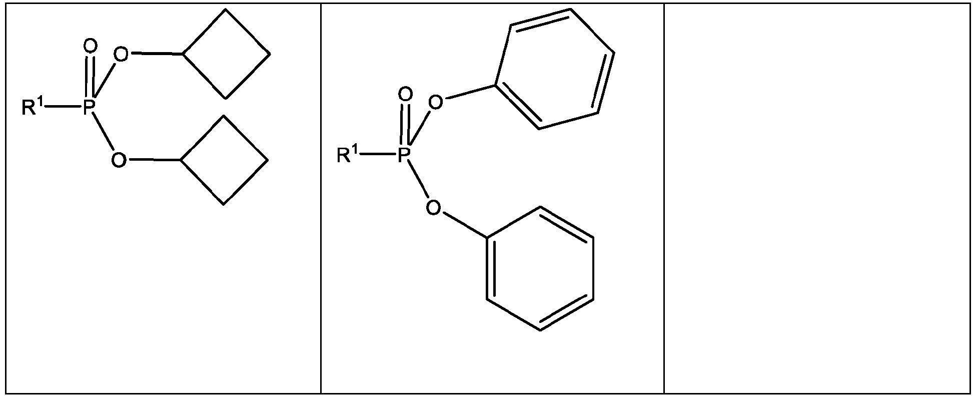

wherein each R¹ is straight or branched C₁₆ alkyl, C₁₇ alkyl, C₁₈ alkyl, C₁₉ alkyl, or C₂₀ alkyl.

According to a particular embodiment, the friction modifier compound of formula (I) is one or more of diethyl octadecylphosphonate, dipropyl octadecylphosphonate, dibutyl octadecylphosphonate, diisopropyl octadecylphosphonate, and diphenyl octadecylphosphonate

### METHODS OF MAKING PHOSPHONIC ACID ESTERS

Methods for making phosphonic acid esters are described in U.S. Pat. No. 2,724,718 to Siles et al. and U.S. Pat. No. 3,812,222 to Kleiner et al., for example. The diesters typically have a total acid number (TAN) up to about 15.

### TREAT RATE OF FRICTION MODIFIER

According to one embodiment, the friction modifier compound is present in the lubricant composition in an amount between about 0.001% w/w to about 10% w/w based on the total weight of the lubricant composition. According to one embodiment, the friction modifier compound may be in the lubricant composition in an amount between about 0.01% w/w to 10% w/w. According to one embodiment, the friction modifier compound may be in the lubricant composition in an amount between about between 0.01% w/w to about 5% w/w. According to one embodiment, the friction modifier compound may be in the lubricant composition in an amount between about between about 0.01% w/w to about 2.0% w/w. According to one embodiment, the friction modifier compound may be in the lubricant composition in an amount between about between about 0.01% w/w to about 0.5% w/w. According to one embodiment, the friction modifier compound may be in the lubricant composition in an amount between about between about 0.01% w/w to about 0.4% w/w. According to one embodiment, the friction modifier compound may be in the lubricant composition in an amount between about between about 0.01% w/w to about 0.3% w/w. According to one embodiment, the friction modifier compound may be in the lubricant composition in an amount between about between about 0.01% w/w to about 0.2% w/w. The ratio of diester to monoester may be varied to provide prolonged stability of the esters in the base oil.

### ANTIWEAR COMPOUND

The lubricant additive and lubricant compositions as provided here include one or more antiwear compounds as defined in the claims. The antiwear compounds as provided herein exclude phosphonates and, as such, do not include organic compounds characterized by a carbon-to-phosphorus (C-P) bond.

According to a particular embodiment, the antiwear compound is thermally stable and includes phosphorous. A phosphorous-containing antiwear compound, if used, generally will be contained in the finished lubricant in an amount sufficient to provide about 100 to about 500 ppm phosphorus therein.

Other examples of additional suitable antiwear compounds include, but are not limited to, titanium compounds, tartrates, tartrimides, oil soluble amine salts of phosphorus compounds. The tartrate or tartrimide may contain alkyl-ester groups, where the sum of carbon atoms on the alkyl groups may be at least 8. According to a particular embodiment, the antiwear compound may include a citrate. According to another embodiment, the antiwear compound is a sulfurized olefin; thiocarbamate-containing compounds including, thiocarbamate esters, alkylene-coupled thiocarbamates, and bis(S-alkyldithiocarbamyl)disulfides; and mixtures thereof.

Antiwear compounds are more fully described in European Patent No. 1490460. Other suitable phosphorus-containing antiwear compounds include oil-soluble amine salts or amine adducts of a phosphoric acid ester, such as those taught in U.S. Pat. Nos. 5,354,484, 5,763,372, and 5,942,470.

In an embodiment, the phosphorus-containing antiwear compound can include a phosphite, a phosphate, a thiophosphate, a dithiophosphate, or any combination thereof.

According to a particular embodiment, the antiwear compound includes zinc dialkyldithiophosphate (ZDDP) and any tribologically acceptable salts thereof including amine salt alternatives. According to a particular embodiment, the antiwear compound includes an ashless, chlorine-free dialkyldithiophosphate and any tribologically acceptable salts thereof including amine salt alternatives. According to a particular embodiment, the antiwear compound includes Irgalube^{®} 353, commercially available from BASF.

According to the invention, the antiwear compound is an ashless phosphorus-containing compound.

The phosphorus-containing compound contains at least one phosphorus center. In another embodiment, the phosphorus-containing compound can contain more than one phosphorus center, such as at least two phosphorus centers, at least three phosphorus centers, or at least four phosphorus centers.

According to a particular embodiment, the antiwear compound includes one or more of the antiwear compounds as fully described, for example, in U.S. Patent No. 10,329,511, U.S. Patent No. 9,944,879, U.S. Patent No. 9,481,696, U.S. Patent No. 9,518,242, and U.S. Patent No. 9,885,003.

The antiwear compound required according to the invention as provided herein is a compound of formula (II): 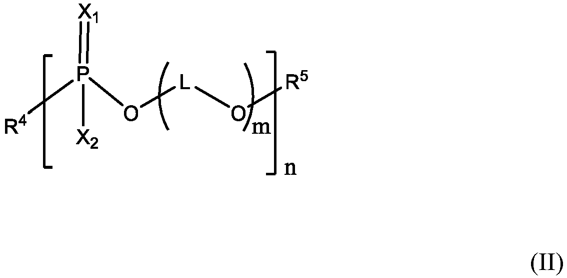
or a tribologically acceptable salt thereof,
wherein:
   each X₁ is independently oxygen (O) or sulfur (S);
   each X₂ is independently -OR", -OH, -SR", -SR‴C(O)OH, and -SH;
   R⁴ is -OR", -OH, or H;
   R⁵ is -R";
   each R" is independently a C₁ to C₁₈ hydrocarbyl chain;
   each R‴ is independently a C₁ to C₃ branched or linear alkyl chain;
   n is 1, 2, or 3;
   m is 0 when n is 1;
   m is 1 when n is 2 or 3; and
   L is a linker selected from the divalent group consisting of acyclic C₁-C₅ hydrocarbon and cyclic C₃-C₁₀ hydrocarbon.

According to one embodiment, X₁ is O and X₂ contains S. According to one embodiment, X₁ is S and X₂ contains O. According to one embodiment, both X₁ and X₂ both contain O or both contain S.

In a particular embodiment, the ashless phosphorus-containing compound of formula (II) may be a thiophosphate where
X₁ is S;
X₂ is -OR" or -OH;
R⁴ is -OR" or -OH; and
R⁵ is -R".

For example, the thiophosphate can be a sulfurized phosphite, such as sulfurized dibutyl hydrogen phosphite or sulfurized dibutyl oleyl hydrogen phosphite.

In one embodiment, R" is independently linear, branched or cyclic C₄-C₁₈ alkyl. According to one embodiment, R" is independently a linear or branched C₄-C₁₈ alkyl. According to one embodiment, R" is independently a cyclic C₄-C₁₈ alkyl. According to one embodiment, R" is a linear or branched C₄-C₁₈ alkyl and the other is a cyclic C₄-C₁₈ alkyl. Cyclic C₄-C₁₈ alkyl include mono-cyclic cyclobutyl, cyclopentyl, and cyclohexyl, as well as mono- and bi-cyclic cycloheptyl and cyclooctyl.

Suitable examples of a linear C₄-C₁₈ alkyl group include, but are not limited to, n-butyl, n-pentyl, n-hexyl, n-heptyl and n-octyl. Examples of a branched C₄-C₁₈ alkyl include isobutyl (2-methylpropyl), tert-butyl (1,1-dimethylethyl), iso-pentyl (2-methylbutyl), neo-pentyl (2,2-dimethylpropyl), iso-hexyl (2-methylpentyl, 3-methylpentyl, or 2,3-dimethylbutyl), neo-hexyl (2,2-dimethylbutyl), iso-heptyl (2-methylhexyl), 3-methylhexyl, neo-heptyl (2,2-dimethylpentyl), 2,3-dimethylpentyl, 2,4-dimethylpentyl, 3,3-dimethylpentyl, 3-ethylpentyl, 2,2,3-trimethylbutyl, 2-methylheptyl, 3-methylheptyl, 4-methylheptyl, 3-ethylhexyl, 2,2-dimethylhexyl, 2,3-dimethylhexyl, 2,4-dimethylhexyl, 2,5-dimethylhexyl, 3,3-dimethylhexyl, 3,4-dimethylhexyl, 3-ethyl-2-methylpentyl, 3-ethyl-3-methylpentyl, 2,2,3-trimethylpentyl, 2,2,4-trimethylpentyl, 2,3,3-trimethylpentyl, 2,3,4-trimethylpentyl, or 2,2,3,3-tetramethylbutyl. According to one embodiment, R" is independently any of aforementioned examples of an alkyl group.

In any of the embodiments, L is a linker selected from the divalent group consisting of acyclic C₁-C₅ hydrocarbon and cyclic C₃-C₁₀ hydrocarbon. In any of the embodiments, L is a linker selected acyclic C₁-C₅ hydrocarbon. Examples of acyclic C₁-C₅ hydrocarbons include - CH₂-, -CH₂CH₂-, -CCH₃-, -CH₂CH₂CH₂-, -CH₂CHCH₃-, -CHCH₃CH₂-, -C(CH₃)₂-, -CH₂CH₂CH₂CH₂-, -CHCH₃CH₂CH₂-, -CH₂-CH₂CHCH₃-, -CH₂CHCH₃CH₂-, -C(CH₃)₂CH₂-, -CH₂C(CH₃)₂-, -CH(CH₂CH₃)CH₂-, -CH₂CH(CH₂CH₃)-, -CH₂CH₂CH₂CH₂CH₂-, - CH₂CHCH₃CH₂CH₂-, -CHCH₃CH₂CH₂CH₂-, -CH₂CH₂CH₂CHCH₃-, -CH₂CH₂CHCH₃CH₂-, -CH₂CH₂CHCH₃CH₂-, -CH₂CHCH₃CH₂CH₂-, -CH₂C(CH₃)₂CH₂-,-C(CH₃)₂CH₂CH₂-, -CH₂CH(CH₂CH₃)CH₂-, -CH(CH₂CH₃)CH₂CH₂-, -CH(CH₂CH₂CH₃)CH₂-, -C(CH₃)(CH₂CH₃)CH₂-, -CH₂C(CH₃)(CH₂CH₃)-, - CH₂CH₂CH(CH₂CH₃)-, H₂CH(CH₂CH₃)CH₂-, and -CH₂CH(CH₂CH₂CH₃)-. The skilled artisan would understand that the list of the acyclic C₁-C₅ hydrocarbon linkers listed above is not necessarily exhaustive and that any acyclic C₁-C₅ hydrocarbon linker not listed above may also be a suitable linker.

According to one embodiment, L is a linker selected from cyclic C₃-C₁₀ hydrocarbons. Cyclic C₄-C₈ hydrocarbons include monocyclic cyclopentyl and cyclohexyl as well as mono and bicyclic cycloheptyl, cyclooctyl, cyclononyl, and cyclodecyl.

In any of the embodiments, n is 1, 2, or 3. In any of the embodiments, m is 0 when n is 1. According to one embodiment, m is 1 when n is 2 or 3. According to one embodiment, when n is 1 (and m is zero), the compound of formula (II) is a compound of formula (IIa) having one phosphorus center:

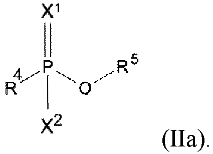

In an embodiment, the compound of formula (IIa) can be a phosphite, a phosphate, a thiophosphate, a dithiophosphate, or any combination thereof. According to one embodiment, in the compound of formula (IIa), X¹, X², R⁴ and R⁵ are as defined above for the compound of formula (II).

In a particular embodiment, the compound of formula (IIa) may be a phosphite, wherein:
X₁ is O;
X₂ is H;
R⁴ is -OR";
R⁵ is -R".

For example, the phosphite can be a dialkyl hydrogen phosphite such as dibutyl hydrogen phosphite, dioleyl hydrogen phosphite, or any tribologically acceptable salts thereof including amine salt alternatives.

In a particular embodiment, the compound of formula (IIa) may be a phosphate, wherein:
X₁ is O;
X₂ is -OR" or -OH;
R⁴ is -OR" or -OH; and
R⁵ is -R".

For example, the phosphate can be a monoalkyl phosphate (where X₂ and R⁴ are both - OH), a dialkyl phosphate (where X₂ is -OH and R⁴ -OR", or vice versa), a trialkyl phosphate (where X₂ and R⁴ are both -OR"), or any combination thereof. In a particular example, the phosphate can be an amyl acid phosphate, a 2-ethylhexyl acid phosphate, a tricresyl phosphate, or any combination thereof.

According to one embodiment, the antiwear compound as provided herein is a compound of formula (IIb): 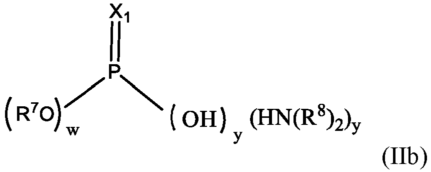
or a tribologically acceptable salt thereof,
wherein,
X₁ is O;
R⁷ is n-hexyl;
wherein when w=1, then R⁵ is R⁷ and y=2, such that X₂ and R⁴ are both -OH; and
wherein when w=2, then R⁵ is R⁷, R⁴ is R⁷O, and y =1 such that X₂ is -OH.

As indicated in formula (IIb), the phosphate may be salted with an amine where R⁸ is acyclic C₁₁-C₁₈ hydrocarbyl.

According to a particular embodiment, the antiwear compound of formula (IIIb) includes Irgalube 349 (commercially available from BASF) and any tribologically acceptable salts thereof including amine salt alternatives.

According to one embodiment, the antiwear compound as provided herein is a compound of formula (IIc): 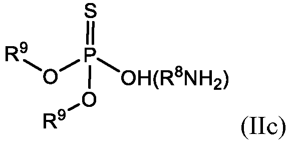
or a tribologically acceptable salt thereof,
wherein, with reference to formula (II), X₁ is S, X₂ is OH, R⁴ is OR⁹ , and R⁵ , with reference to formula (IIc), is R⁹,
wherein each R⁹ is independently hydrogen or linear, branched or cyclic C₄-C₈ alkyl.

As indicated in formula (IIb), the phosphate in formula (IIc) may be salted with an amine where R⁸ is acyclic C₁₁-C₁₈ hydrocarbyl. In a particular embodiment, the ashless phosphorus-containing compound may be a dithiophosphate within formula (II) and (IIc) where
R₁ is S;
X₂ is -SR" or -SR‴C(O)OH;
R⁴ is -OR";
R⁵ is -R".

In a particular embodiment, X₂ in the dithiophosphate is -SR‴C(O)OH. An example of such a dithiophosphate is Irgalube 63 (commercialized by BASF).

According to one embodiment, when n is 2 or 3, the compound of formula (II) is a compound of formula (IId) or (IIe) having more than one phosphorus center. According to an embodiment, when n is 2, and m is 1, the compound of formula (II) is a compound of formula (IId) having two phosphorus centers:

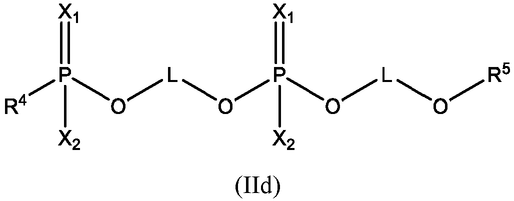

According to one embodiment, in the compound of formula (IId), X¹, X², R⁴ and R⁵ are as defined above for the compound of formula (II). According to a particular compound of formula (IId), X₁ and X₂ are independently O or S.

According to one embodiment, L is a linker selected from the divalent group consisting of acyclic C₁-C₅ hydrocarbon and cyclic C₃-C₁₀ hydrocarbon. In other embodiments, L is a linker selected acyclic C₁-C₅ hydrocarbon. Examples of acyclic C₁-C₅ hydrocarbons include - CH₂-, -CH₂CH₂-, -CCH₃-, -CH₂CH₂CH₂-, -CH₂CHCH₃-, -CHCH₃CH₂-, -C(CH₃)₂-, -CH₂CH₂CH₂CH₂-, -CHCH₃CH₂CH₂-, -CH₂-CH₂CHCH₃-, -CH₂CHCH₃CH₂-, -C(CH₃)₂CH₂-, -CH₂C(CH₃)₂-, -CH(CH₂CH₃)CH₂-, -CH₂CH(CH₂CH₃)-, -CH₂CH₂CH₂CH₂CH₂-, -CH₂CHCH₃CH₂CH₂-, -CHCH₃CH₂CH₂CH₂-, - CH₂CH₂CH₂CHCH₃-, -CH₂CH₂CHCH₃CH₂-, -CH₂CH₂CHCH₃CH₂-, -CH₂CHCH₃CH₂CH₂-, -CH₂C(CH₃)₂CH₂-,-C(CH₃)₂CH₂CH₂-, -CH₂CH(CH₂CH₃)CH₂-, -CH(CH₂CH₃)CH₂CH₂-, -CH(CH₂CH₂CH₃)CH₂-, -C(CH₃)(CH₂CH₃)CH₂-, -CH₂C(CH₃)(CH₂CH₃)-, -CH₂CH₂CH(CH₂CH₃)-, CH₂CH(CH₂CH₃)CH₂-, and -CH₂CH(CH₂CH₂CH₃)-. The skilled artisan would understand that the list of the acyclic C₁-C₅ hydrocarbon linkers listed above is not necessarily exhaustive and that any acyclic C₁-C₅ hydrocarbon linker not listed above may also be a suitable linker. According to one embodiment, L is a linker selected from cyclic C₃-C₁₀ hydrocarbons. Cyclic C₄-C₈ hydrocarbons include monocyclic cyclopentyl and cyclohexyl as well as mono and bicyclic cycloheptyl, cyclooctyl, cyclononyl, and cyclodecyl.

According to another embodiment, when n is 2 (and m is 1), the compound of formula (II) is a compound of formula (IIe) having three phosphorus centers: 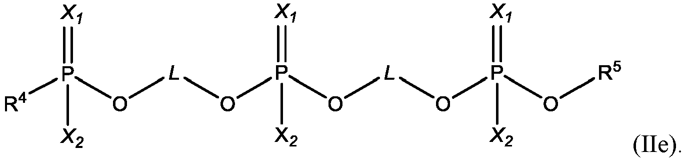 In the compound of formula (IIe), X¹, X², R⁴ and R⁵ are as defined above for the compound of formula (IIb).

According to one embodiment, the tribologically acceptable salt as provided herein is an amine salt of the formula (IIf):

⁺(H₂N-R⁶)₂ (IIf)

wherein,
R⁶ hydrogen, linear or branched C₁-C₁₈ alkyl, acyclic C₁-C₁₈ hydrocarbyl or cyclic C₃-C₁₈ hydrocarbyl.

According to one embodiment, the antiwear compound may include amine salts or amine adducts of the antiwear compounds discussed herein. In a particular embodiment, the salt may be formed with aliphatic amine. The aliphatic amine may be a primary amine in which the amino nitrogen is linked to a tertiary carbon to give a t-butyl grouping. According to such an embodiment, the aliphatic amine may include a mixture of isomeric amines in the C₁₂-C₁₄ range. One example of the aliphatic amine may be Primene 81 (a primary aliphatic amine with highly branched chains in which the amnio nitrogen atom is linked to a tertiary carbon to give a t-alkyl grouping; commercially available from Dow): 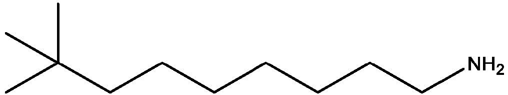 according to the invention, the antiwear compound of formula (II) is an ashless phosphorus-containing compound.

According to one embodiment, the antiwear compound as provided herein is a compound of formula (III) having at least three phosphorus centers: 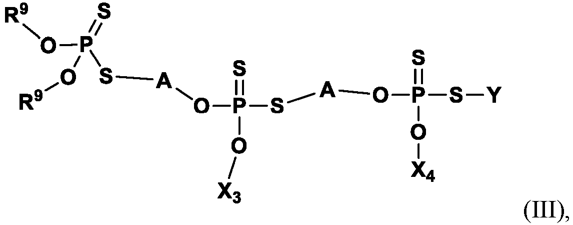
or a tribologically acceptable salt thereof, 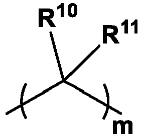
wherein A is: ;
   each R⁹ is the same or different and is independently selected from alkyl, alkenyl, cycloalkyl, cycloalkylalkyl, aryl, and aralkyl, wherein said aryl and aralkyl are optionally substituted with one to three substituents each independently selected from alkyl and alkenyl;
   each R¹⁰ and R¹¹ are independently selected from H, alkyl, alkenyl, cycloalkyl and cycloalkylalkyl;
   Y is selected from the group consisting of alkyl, alkoxyalkyl, benzyl, and -R¹²-R¹³-R¹⁴;
   R¹² is alkylene;
   R¹³ is selected from the group consisting of a bond, alkylene, and -C(O)-;
   R¹⁴ is selected from the group consisting of alkyl, hydroxyalkyl, hydroxyalkyleneoxy, hydroxy and alkoxy;
   m is an integer from 2 to 8;
   X₃ is R¹⁶ or Z;
   X₄ is selected from the group consisting of 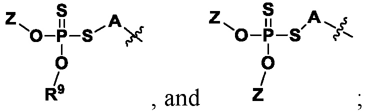
   R¹⁶ is alkyl, alkenyl, cycloalkyl, cycloalkylalkyl, aryl, and aralkyl, wherein said aryl and aralkyl are optionally substituted with one to three substituents each independently selected from alkyl and alkenyl; and
Z is 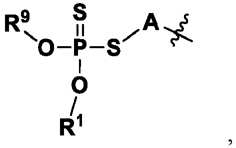
wherein when X₃ is R¹⁶, X₄ is Z.

The antiwear compound of formula (III) is an ashless phosphorus-containing compound.

The antiwear compounds as provided herein may be present in an amount of from about 0.001% w/w to about 15% w/w based on the total weight of the lubricating composition. According to another embodiment, the antiwear compounds as provided herein may be present in an amount of from about 0.01% w/w to about 10% w/w. According to another embodiment, the antiwear compounds as provided herein may be present in an amount of from about 0.05% w/w to about 5% w/w. According to another embodiment, the antiwear compounds as provided herein may be present in an amount of from about 0.1% w/w to about 3.0 % w/w.

### BASE OIL

The lubricant additive concentrates provided herein may be added into an oil of lubricating viscosity directly. Generally, the lubricant additive concentrates will further be incorporated into the oil of lubricating viscosity at a particular weight percentage relative to the total weight of the final lubricant composition. The weight percentage selected is generally referred to as the treat rate and the lubricant composition containing the lubricant additive concentrate is generally referred to as a finished fluid.

The lubricant compositions as provided herein include a lubricating base oil. The lubricant additive concentrates as provided here may be added to a base oil. As provided herein, base oils are categorized by the American Petroleum Institute (API) into category groups Group I-V. The American Petroleum Institute has categorized these different basestock types as follows: Group I, greater than 0.03 weight percent sulfur, and/or less than 90 volume percent saturates, viscosity index between 80 and 120; Group II, less than or equal to 0.03 weight percent sulfur, and greater than or equal to 90 volume percent saturates, viscosity index between 80 and 120; Group III, less than or equal to 0.03 weight percent sulfur, and greater than or equal to 90 volume percent saturates, viscosity index greater than 120; Group IV, all polyalphaolefins. Hydrotreated basestocks and catalytically dewaxed basestocks, because of their low sulfur and aromatics content, generally fall into the Group II and Group III categories. Polyalphaolefins (Group IV basestocks) are synthetic base oils prepared from various alpha olefins and are substantially free of sulfur and aromatics.

Groups I, II, and III are mineral oil process stocks. Group IV base oils contain true synthetic molecular species, which are produced by polymerization of olefinically unsaturated hydrocarbons. Many Group V base oils are also true synthetic products and may include diesters, polyol esters, polyalkylene glycols, alkylated aromatics, polyphosphate esters, polyvinyl ethers, and/or polyphenyl ethers, and the like, but may also be naturally occurring oils, such as vegetable oils. Although Group III base oils are derived from mineral oil, the rigorous processing that these fluids undergo causes their physical properties to be very similar to some true synthetics, such as PAOs. Therefore, oils derived from Group III base oils may sometimes be referred to as synthetic fluids in the industry.

The base oils as provided herein may be in the form of a mineral oil or synthetic oil, animal oil, vegetable oil, or mixtures thereof. According to one embodiment, the mineral oils, both paraffinic and naphthenic and mixtures thereof can be employed as lubricating oil or as the grease vehicle. Also contemplated are greases in which any of the foregoing oils are employed as a base.

The lubricating compositions as provided herein may exhibit a viscosity of at least an SAE 90 or 75W-85. According to one embodiment, the viscosity indices are from about 95 to about 130. According to one embodiment, the average molecular weights of these oils can range from about 250 to about 800.

According to one embodiment synthetic oils may employed as a vehicle for the antiwear compounds, friction modifier compounds, or lubricant additive concentrates provided herein. According to one embodiment, mixtures of mineral and synthetic oils may be employed as a vehicle. Typical synthetic oils include, but are not limited to, polyisobutylenes, polybutenes, polydecenes, siloxanes and silicones (polysiloxanes).

According to one embodiment, the lubricant compositions provided herein include a major amount of base oil of lubricating viscosity or a grease prepared therefrom and a minor amount of a friction modifier and antiwear compound. In certain embodiments, the major amount of base oil is from about 50.00 wt % to about 99.999 wt % of the total lubricating composition.

### USE WITH MACHINE PARTS

The lubricant compositions as provided herein are suitable for use with a variety of machine parts and components.

### ADDITIONAL ADDITIVES

The lubricant compositions can optionally further comprise one or more other additive compounds. Without limitation, additive compounds that can be used in the lubricant compositions as provided herein include antioxidants, additional antiwear compounds, corrosion inhibitors, detergents, extreme pressure agents, viscosity index improvers, and additional friction reducers.

In one embodiment, the lubricant compositions as described herein include a friction modifier compound and at least one additional additive composition selected from the group consisting of an antioxidant, antiwear compounds, corrosion inhibitor, detergent, extreme pressure agent, dispersant, viscosity index improvers, and friction modifiers.

### Antioxidant

According to one an embodiment, the lubricant compositions as provided herein can include an antioxidant. The antioxidant can include, for example, a phenate, a phenate sulfide, a sulfurized olefin, a phosphosulfurized terpene, a sulfurized ester, an aromatic amine, an alkylated diphenylamine (e.g., nonyl diphenylamine, di-nonyl diphenylamine, octyl diphenylamine, dioctyl diphenylamine), a phenyl-alpha-naphthylamine, an alkylated phenyl-alpha-naphthylamine, a hindered non-aromatic amine, a phenol, a hindered phenol, an oil-soluble molybdenum compound, a macromolecular antioxidant, or any combination thereof. The antioxidant can include a single antioxidant or a combination of two or more antioxidants.

The hindered phenol antioxidant may contain a secondary butyl and/or a tertiary butyl group as a sterically hindering group. The phenol group may be further substituted with a hydrocarbyl group and/or a bridging group linking to a second aromatic group. The hindered phenol antioxidant can include 2,6-di-tert-butylphenol, 4-methyl-2,6-di-tert-butylphenol, 4-ethyl-2,6-di-tert-butylphenol, 4-propyl-2,6-di-tert-butylphenol 4-butyl-2,6-di-tert-butylphenol, or 4-dodecyl-2,6-di-tert-butylphenol. In an embodiment, the hindered phenol antioxidant may be an ester and may include, for example, an addition product derived from 2,6-di-tert-butylphenol and an alkyl acrylate, wherein the alkyl group may contain about 1 to about 18, or about 2 to about 12, or about 2 to about 8, or about 2 to about 6, or about 4 carbon atoms.

The antioxidant can include a diarylamine and a high molecular weight phenol. In an embodiment, the lubricating composition may contain a mixture of a diarylamine antioxidant and a high molecular weight phenol antioxidant, such that each of those antioxidants may be present in an amount sufficient to provide up to about 5%, by weight of the antioxidant, based upon the total weight of the lubricating composition. In an embodiment, the antioxidant may be a mixture of about 0.3 to about 1.5% diarylamine and about 0.4 to about 2.5% high molecular weight phenol, by weight, based upon the total weight of the lubricating composition.

Sulfurized olefins, when used, can be derived from an olefin that is sulfurized to form the sulfurized olefin. The olefin can include a propylene, a butylene, an isobutylene, a polyisobutylene, a pentene, a hexene, a heptene, an octene, a nonene, a decene, an undecene, a dodecene, a tridecene, a tetradecene, a pentadecene, a hexadecene, a heptadecene, a octadecene, a nonadecene, a eicosene, or a mixture thereof. In a particular embodiment, the olefin can include a hexadecene, a heptadecene, an octadecene, a nonadecene, an eicosene, a mixture thereof, or one or more of their dimers, trimers and tetramers. In another embodiment, the olefin may be a Diels-Alder adduct of a diene such as 1,3-butadiene and an unsaturated ester, such as, butylacrylate.

The sulfurized olefin, when used, can include a sulfurized fatty acid, its ester, or both. The fatty acid can be obtained from a vegetable oil or an animal oil, and can contain about 4 to about 22 carbon atoms. The fatty acid and its ester can include a triglyceride, an oleic acid, a linoleic acid, a palmitoleic acid, or a mixture thereof. In an embodiment, the fatty acid can be obtained from a lard oil, a tall oil, a peanut oil, a soybean oil, a cottonseed oil, a sunflower seed oil or a mixture thereof. The fatty acid and/or its ester may be mixed with an olefins, such as an α-olefin.

The antioxidant may be present in a range of from about 0 % w/w to about 20% w/w, or about 0.1% w/w to about 10% w/w, or about 1% w/w to about 5% w/w, by the weight of each antioxidant, based on the total weight of the lubricating composition.

### Detergents

According to one embodiment, the lubricant compositions as provided herein may optionally include one or more neutral, low based, or overbased detergents, and mixtures thereof. Suitable detergent substrates include phenates, sulfur containing phenates, sulfonates, calixarates, salixarates, salicylates, carboxylic acids, phosphorus acids, mono- and/or dithiophosphoric acids, alkyl phenols, sulfur coupled alkyl phenol compounds and methylene bridged phenols. Suitable detergents and their methods of preparation are described in greater detail in numerous patent publications, including U.S. Patent No. 7,732,390, and references cited therein.

The detergent substrate may be salted with an alkali or alkaline earth metal such as, but not limited to, calcium, magnesium, potassium, sodium, lithium, barium, or mixtures thereof. According to one embodiment, the detergent is free of barium. A suitable detergent may include alkali or alkaline earth metal salts of petroleum sulfonic acids and long chain mono- or di-alkylarylsulfonic acids with the aryl group being one of benzyl, tolyl, and xylyl.

Overbased detergent additives are well known in the art and may be alkali or alkaline earth metal overbased detergent additives. Such detergent additives may be prepared by reacting a metal oxide or metal hydroxide with a substrate and carbon dioxide gas. The substrate is typically an acid, for example, an acid such as an aliphatic substituted sulfonic acid, an aliphatic substituted carboxylic acid, or an aliphatic substituted phenol.

The term "overbased" relates to metal salts, such as metal salts of sulfonates, carboxylates, and phenates, wherein the amount of metal present exceeds the stoichiometric amount. Such salts may have a conversion level in excess of 100% (i.e., they may comprise more than 100% of the theoretical amount of metal needed to convert the acid to its "normal," "neutral" salt). The expression "metal ratio," often abbreviated as MR, is used to designate the ratio of total chemical equivalents of metal in the overbased salt to chemical equivalents of the metal in a neutral salt according to known chemical reactivity and stoichiometry. In a normal or neutral salt, the metal ratio is one and in an overbased salt, the MR, is greater than one. Such salts are commonly referred to as overbased, hyperbased, or superbased salts and may be salts of organic sulfur acids, carboxylic acids, or phenols. The overbased detergent may have a metal ratio of from 1.1:1, or from 2:1, or from 4:1, or from 5:1, or from 7:1, or from 10:1.

According to one embodiment, a detergent can be used for reducing or preventing rust in a gear, axle, or engine. The detergent may be present at about 0% w/w to about 10% w/w, or about 0.1% w/w to about 8% w/w, or about 1% w/w to about 4% w/w, or greater than about 4% w/w to about 8% w/w by weight of the detergent, based on the total weight of the lubricant composition.

### Dispersants

According to one embodiment, the lubricant compositions as provided herein may optionally include one or more dispersants or mixtures thereof. Dispersants are often known as ashless-type dispersants because, prior to mixing in a lubricating composition, they do not contain ash-forming metals and they do not normally contribute any ash when added to a lubricant. Ashless-type dispersants are characterized by a polar group, a relatively high molecular weight hydrocarbon chain, and a connecting group linking the polar group and the hydrocarbon chain. The hydrocarbon chain can be derived from a high molecular weight polymer, such as a polyalkene, an olefin copolymer, a polyacrylate, a polymethacrylate, or a styrene-ester polymer. In a particular embodiment, the polyalkene can include a polyisobutylene. In a particular embodiment, the olefin copolymer can include an ethylene alpha-olefin copolymer. In a particular embodiment, the ethylene alpha-olefin copolymer can include a copolymer derived from ethylene and one or more C₃₋₁₀ alpha-olefins. The polar group can be derived from an alcohol or an amine. The linking group can include a succinic linking group.

The dispersant can include a N-substituted long chain alkenyl succinimide. Examples of a N-substituted long chain alkenyl succinimide include polyisobutylene succinimide with number average molecular weight of the polyisobutylene substituent in a range of about 350 to about 5000, or about 500 to about 3000. Succinimide dispersants and their preparation are disclosed, for instance in U.S. Pat. No. 7,897,696 and U.S. Pat. No. 4,234,435. Succinimide dispersants are typically an imide formed from a polyamine, typically a poly(ethyleneamine).

In an embodiment, the lubricant compositions as provided herein include at least one polyisobutylene succinimide dispersant derived from polyisobutylene with number average molecular weight in the range about 350 to about 5000, or about 500 to about 3000. The polyisobutylene succinimide may be used alone or in combination with other dispersants.

In an embodiment, polyisobutylene (PIB), when included, can have at least 50 mol%, at least 60 mol%, at least 70 mol%, at least 80 mol%, or at least 90 mol% content of terminal double bonds. Such a PIB is also referred to as highly reactive PIB ("HR-PIB"). HR-PIB having a number average molecular weight ranging from about 800 to about 5000 is suitable for use in an embodiment of the present disclosure. Conventional non-highly reactive PIB typically has no greater than 50 mol%, no greater than 40 mol%, no greater than 30 mol%, no greater than 20 mol%, or no greater than 10 mol% content of terminal double bonds.

An HR-PIB having a number average molecular weight ranging from about 900 to about 3000 may be suitable. Such an HR-PIB is commercially available, or can be synthesized by the polymerization of isobutene in the presence of a non-chlorinated catalyst such as boron trifluoride, as described in U.S. Patent No. 4,152,499 and U.S. Patent No. 5,739,355. When used in the aforementioned thermal ene reaction, HR-PIB may lead to higher conversion rates in the reaction, as well as lower amounts of sediment formation, due to increased reactivity.

The dispersant can include a Mannich base. A Mannich base is a material formed by the condensation of a higher molecular weight, alkyl substituted phenol, a polyalkylene polyamine, and an aldehyde such as formaldehyde. Mannich bases are described in more detail in U.S. Patent No. 3,634,515.

The dispersant can include a high molecular weight ester or a half ester amide. The dispersant can be post-treated by reaction with an agent. The agent can include a boron, a urea, a thiourea, a dimercaptothiadiazole, a carbon disulfide, an aldehyde, a ketone, a carboxylic acid, a hydrocarbon-substituted succinic anhydride, a maleic anhydride, a nitrile, an epoxide, a carbonate, a cyclic carbonate, a hindered phenolic ester, or a phosphorus compound, or any combination thereof. U.S. Patent No. 7,645,726; U.S. 7,214,649; and U.S. 8,048,831 describe some suitable post-treatment methods and post-treated products.

The dispersant, if present, can be used in an amount sufficient to provide up to about 20% w/w, based upon the total weight of the lubricating composition. The amount of the dispersant that can be used may be about 0.1% w/w to about 15% w/w, or about 0.1% w/w to about 10% w/w, or about 3% w/w to about 10% w/w, or about 1% w/w to about 6% w/w, or about 7% w/w to about 12% w/w, based upon the total weight of the lubricating composition. In an embodiment, the lubricating composition utilizes a mixed dispersant system.

### Extreme Pressure Agents

According to one embodiment, the lubricating compositions as provided herein may optionally include one or more extreme pressure agents. Extreme Pressure (EP) agents that are soluble in the oil include sulfur- and chlorosulfur-containing EP agents, chlorinated hydrocarbon EP agents and phosphorus EP agents. Examples of such EP agents include, but are not limited to, chlorinated waxes; organic sulfides and polysulfides such as dibenzyldisulfide, bis(chlorobenzyl) disulfide, dibutyl tetrasulfide, sulfurized methyl ester of oleic acid, sulfurized alkylphenol, sulfurized dipentene, sulfurized terpene, and sulfurized Diels-Alder adducts; phosphosulfurized hydrocarbons such as the reaction product of phosphorus sulfide with turpentine or methyl oleate; phosphorus esters such as the dihydrocarbyl and trihydrocarbyl phosphites, e.g., dibutyl phosphite, diheptyl phosphite, dicyclohexyl phosphite, pentylphenyl phosphite; dipentylphenyl phosphite, tridecyl phosphite, distearyl phosphite and polypropylene substituted phenyl phosphite; metal thiocarbamates such as zinc dioctyldithiocarbamate and barium heptylphenol diacid; amine salts of alkyl and dialkylphosphoric acids, including, for example, the amine salt of the reaction product of a dialkyldithiophosphoric acid with propylene oxide; and mixtures thereof.

### Additional Friction Modifiers

According to one embodiment, the lubricant compositions provided herein may optionally include one or more additional friction modifier compounds. Suitable additional friction modifier compounds may include metal containing and metal-free friction modifiers and may include, but are not limited to, imidazolines, amides, amines, succinimides, alkoxylated amines, alkoxylated ether amines, amine oxides, amidoamines, nitriles, betaines, quaternary amines, imines, amine salts, amino guanidines, alkanolamides, phosphonates, metal-containing compounds, glycerol esters, sulfurized fatty compounds and olefins, sunflower oil and other naturally occurring plant or animal oils, dicarboxylic acid esters, esters or partial esters of a polyol and one or more aliphatic or aromatic carboxylic acids, and the like.

Suitable friction modifiers may contain hydrocarbyl groups that are selected from straight chain, branched chain, or aromatic hydrocarbyl groups or mixtures thereof, and may be saturated or unsaturated. The hydrocarbyl groups may be composed of carbon and hydrogen or hetero atoms such as sulfur or oxygen. The hydrocarbyl groups may range from about 12 to about 25 carbon atoms. In a embodiments the friction modifier may be a long chain fatty acid ester. In an embodiment the long chain fatty acid ester may be a mono-ester, or a di-ester, or a (tri)glyceride. The friction modifier may be a long chain fatty amide, a long chain fatty ester, a long chain fatty epoxide derivative, or a long chain imidazoline.

Other suitable friction modifiers may include organic, ashless (metal-free), nitrogen-free organic friction modifiers. Such friction modifiers may include esters formed by reacting carboxylic acids and anhydrides with alkanols and generally include a polar terminal group (e.g. carboxyl or hydroxyl) covalently bonded to an oleophilic hydrocarbon chain. An example of an organic ashless nitrogen-free friction modifier is known generally as glycerol monooleate (GMO) which may contain mono-, di-, and tri-esters of oleic acid. Other suitable friction modifiers are described in U.S. Pat. No. 6,723,685.

Aminic friction modifiers may include amines or polyamines. Such compounds can have hydrocarbyl groups that are linear, either saturated or unsaturated, or a mixture thereof and may contain from about 12 to about 25 carbon atoms. Further examples of suitable friction modifiers include alkoxylated amines and alkoxylated ether amines. Such compounds may have hydrocarbyl groups that are linear, either saturated, unsaturated, or a mixture thereof, and may contain from about 12 to about 25 carbon atoms. Examples include ethoxylated amines and ethoxylated ether amines. The amines and amides may be used as such or in the form of an adduct or reaction product with a boron compound such as a boric oxide, boron halide, metaborate, boric acid or a mono-, di- or tri-alkyl borate. Other suitable friction modifiers are described in U.S. Pat. No. 6,300,291.

An additional friction modifier compound may be present in amounts of about 0% w/w to about 10% w/w, or about 0.01% w/w to about 8% w/w, or about 0.1% w/w to about 4% w/w, based on the total weight of the lubricant composition.

### Viscosity Index Improvers

According to one embodiment, the lubricating compositions provided herein may include one or more viscosity index improvers. Suitable viscosity index improvers may include polyolefins, olefin copolymers, ethylene/propylene copolymers, polyisobutenes, hydrogenated styrene-isoprene polymers, styrene/maleic ester copolymers, hydrogenated styrene/butadiene copolymers, hydrogenated isoprene polymers, alpha-olefin maleic anhydride copolymers, polymethacrylates, polyacrylates, polyalkyl styrenes, hydrogenated alkenyl aryl conjugated diene copolymers, or mixtures thereof. Viscosity index improvers may include star polymers and suitable examples are described in US Publication No. 2012/0101017 A1.

The lubricating compositions herein also may optionally contain one or more dispersant viscosity index improvers in addition to a viscosity index improver or in lieu of a viscosity index improver. Suitable dispersant viscosity index improvers may include, but are not limited to, functionalized polyolefins, for example, ethylene-propylene copolymers that have been functionalized with the reaction product of an acylating agent (such as maleic anhydride) and an amine; polymethacrylates functionalized with an amine, or esterified maleic anhydride-styrene copolymers reacted with an amine.

The total amount of viscosity index improver and/or dispersant viscosity index improver may be about 0% w/w to about 20% w/w, about 0.1% w/w to about 15% w/w, about 0.1% w/w to about 12% w/w, or about 0.5% w/w to about 10% w/w based on the total weight of the lubricating composition.

### Effect Amounts

Effective amounts of the various additive compounds for a specific formulation may be readily ascertained, but for illustrative purposes these general guides for representative effective amounts are provided. The exemplary amounts below are given in weight percentage of the finished fluid.

| Component | Example Ranges (% w/w) | Example Ranges (% w/w) |
|---|---|---|
| A friction modifier composition | 0-10 | 0.3-5 |
| Dispersant | 0-20 | 0.5-8 |
| Extreme Pressure Agent | 0-5 | 2-4 |
| Rust Inhibitor | 0-1.0 | 0.05-1.0 |
| Corrosion Inhibitor | 0-5 | 0.05-3 |
| Demulsifier | 0-5 | 0.005-1.0 |
| Antifoam Agent | 0-0.5 | 0.001-0.1 |
| Diluent | 0-10 | 1.0-5.0 |
| Lubricating Base Oil | Balance | Balance |

### APPLICATIONS

The lubricant compositions and lubricant additive concentrates provided herein may function as automotive spiral-bevel and worm-gear axle oils which operate under extreme pressures, load and temperature conditions, hypoid gear oils operating under both high speed, low-torque and low-speed, high torque conditions.

Industrial lubrication applications in which the lubricant compositions and lubricant additive concentrates provided herein can be used include hydraulic oils, industrial gear oils, slideway machines oils, circulation oils and steam turbine oils, gas turbine oils, for both heavy-duty gas turbines and aircraft gas turbines, way lubricants, gear oils, compressor oils, mist oils and machine tool lubricants. Engine oils are also contemplated such as passenger car motor oils, heavy duty diesel engine oils, marine engine oils, locomotives, and high speed automotive diesel engines.

Functional fluids can also be prepared from the lubricant compositions and lubricant additive concentrates provided herein. These fluids include automotive fluids such as manual transmission fluids, automatic transmission fluids, continuously variable transmission fluids, power steering fluids and power brake fluids. The lubricant compositions and lubricant additive concentrates provided herein can also be incorporated into greases such as automotive, industrial and aviation greases, and automobile chassis lubricants.

### GREASE OPTION

According to one embodiment, where the lubricant compositions provided herein are employed as a grease, the lubricant compositions may generally be used in an amount sufficient to balance the total grease composition, after accounting for the desired quantity of the thickening agent, and other additive compounds included in the grease formulation. A wide variety of materials can be employed as thickening or gelling agents including, but not limited to, any of the conventional metal salts or soaps, such as calcium, or lithium stearates or hydroxystearates, which are dispersed in the lubricating vehicle in grease-forming quantities in an amount sufficient to impart to the resulting grease composition the desired consistency. Other thickening agents that can be employed in the grease formulation include non-soap thickeners, such as surface-modified clays and silicas, aryl ureas, calcium complexes and similar materials. According to one embodiment, grease thickeners can be employed which do not melt or dissolve when used at the required temperature within a particular environment; however, in all other respects, any material which is normally employed for thickening or gelling hydrocarbon fluids for forming greases can be used.

### METHOD OF LUBRICATING

A method of lubricating metal surfaces is also provided. According to one embodiment, the method includes the step of lubricating the surfaces with a lubricant composition. According to a particular embodiment, lubricating metal surfaces with lubricant compositions as provided herein can reduce wear between the metal surfaces when moving. According to one embodiment, the metal surfaces being lubricated can be associated with a metal machine part. The machine part can comprise an axle, a differential, an engine, a manual transmission, an automatic transmission, a continuously variable transmission, a clutch, a hydraulic apparatus, an industrial gear, a slideway apparatus, and a turbine.

A method of improving the solubility of a friction modifier component in a lubricant composition is also provided. The method includes the step of blending a lubricant composition as provided herein with at least one alky phosphonic acid diester compound. According to one embodiment, the phosphonic acid diester compounds is a compound of formula (V): 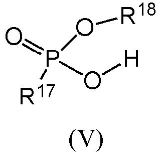 wherein
R¹⁷ is straight, branched, saturated, or unsaturated C₆-C-₂₄ hydrocarbyl wherein the hydrocarbyl does not contain a heteroatom; and
R¹⁸ is hydrogen or a linear, branched or cyclic containing up to eight carbon atoms

A method of lubricating a driveline, industrial, or metalworking device is provided. According to one embodiment, the method includes the step of lubricating the driveline, industrial or metalworking device with a lubricant composition as provided herein.

A method of increasing oxidative stability of a lubricating composition is provided. The method includes the step of adding to the composition an effective amount of a lubricant composition as provided herein.

A method of reducing wear between moving metal surfaces of a machine part is provided. The method includes the step of lubricating the machine part with a lubricant composition as provided herein. According to one embodiment, the machine part is one or more of an industrial gear, a windturbine gear, an axle, a differential, an engine, a crankshaft, a transmission, a clutch, a hydraulic apparatus, a slideway apparatus, and a turbine.

A method of reducing friction between moving metal surfaces of a machine part is provided. The method includes the step of lubricating the machine part with a lubricant composition as provided herein. According to one embodiment, the machine part is one or more of an industrial gear, a windturbine gear, an axle, a differential, an engine, a crankshaft, a transmission, a clutch, a hydraulic apparatus, a slideway apparatus, and a turbine.

A method of reducing both wear and friction between moving metal surfaces of a machine part is provided. The method includes lubricating the machine part with a lubricant composition as provided herein.

A gear fluid is provided and may include a lubricant composition or lubricant additive concentrate as provided herein. The gear fluid may be suitable for a wide variety of gear and/or transmission applications including, but not limited to, automotive gears, industrial gears, stationary gears, rear axles, limited slip differentials, conventional differentials, and/or automatic and manual transmissions. Additive packages are also provided that include a lubricant composition as provided herein and may be suitable for use in multi-plate differentials, cone clutch differentials, torsen differentials, and/or dog clutch differentials

The lubricant compositions and any gear fluid resulting from the addition of the lubricant additive concentrate components as provided herein exhibit excellent high and low temperature performance with friction and wear over time.

The foregoing description is intended to illustrate and not limit the scope of the disclosure, which is defined by the scope of the appended claims. Other aspects, advantages, and modifications are within the scope of the claims. It is intended that the specification and examples be considered as exemplary only, with a true scope of the disclosure being indicated by the following claims. Although certain embodiments of the present disclosure may be described individually herein, it is understood by the skilled artisan that any one embodiment can be combined with any other embodiment or embodiments, and is contemplated by the scope of the instant disclosure.

Other embodiments of the present disclosure will be apparent to those skilled in the art from consideration of the specification and practice of the embodiments disclosed herein. As used throughout the specification and claims, "a" and/or "an" may refer to one or more than one. Unless indicated to the contrary, the numerical parameters set forth in the specification are approximations that may vary depending upon the desired properties sought to be obtained by the present disclosure. At the very least, Each numerical parameter should at least be construed in light of the number of reported significant digits and by applying ordinary rounding techniques. Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in their respective testing measurements.

### EXAMPLES

### Example 1:

Retaining friction, antiwear, and micropitting performance over time would be beneficial for automotive and industrial lubricants. The following example illustrates how the friction modifier compound described herein contributed to this balance over time.

An antiwear compound in combination with a friction modifier was incorporated in a Group I base oil mixture. The frictional characteristics were measured by HFRR (High Frequency Reciprocating Rig) at 70°C, using 4N load with a 1 mm stroke at a frequency of 20 Hz for 9 minutes. The antiwear performance was measured by 4Ball wear (ASTM D4172 at 60kg / 55°C / 1800rpm). In the inventive example, the friction modifier was dibutyl octadecyl phosphonate. In the comparative example, the friction modifier was dimethyl octadecyl phosphonate. The antiwear compound was the same for both examples.

To simulate extended performance, each of these fluids was aged for 8 weeks at 55°C and then tested against the baseline (fresh fluid). As shown in Table 1 below, an acceptable coefficient of friction (0.1 or less) was essentially maintained per HFRR testing for each fluid. The comparative example containing the dimethyl octadecyl phosphonate friction modifier, however, showed a decrease in antiwear performance. Surprisingly, when the friction modifier was switched to dibutyl octadecyl phosphonate, as in the inventive example, the fluid was able to maintain antiwear performance relative to its own baseline (fresh) fluid thereby showing an improvement relative to the comparative example.

**TABLE 1**

| | Comparative Example | | Example | |
|---|---|---|---|---|
| | Fresh | Aged at 55°C for 8 Weeks | Fresh | Aged at 55°C for 8 Weeks |
| Dibutyl octadecyl phosphonate (Formula I, R1 = C18, R2=R3 = C4) | - | | 0.31 | 0.31 |
| Dimethyl octadecyl phosphonate (Formula I, R1 = C18, R2=R3 = C1) | 0.25 | 0.25 | | - |
| O,O-Dibutyl thiophosphate amine salt | 0.2 | 0.2 | 0.2 | 0.2 |
| AP/E Core 600 (Group I) | 24.75 | 24.75 | 24.74 | 24.74 |
| AP/E Core 2500 (Group I) | 74.80 | 74.80 | 74.75 | 74.75 |
| | | | | |
| HFRR - Friction Performance | | | | |
| Coefficient of Friction | 0.101 | 0.098 | 0.089 | 0.097 |
| | | | | |
| 4 Ball Wear ASTM D4172-Wear Performance | | | | |
| 60kg / 55°C / 1800rpm, mm | 0.45 | 0.56 | 0.42 | 0.44 |

### Example 2:

To illustrate the micropitting performance of the friction modifier compound, three fluids (Fluid A, Fluid B, and Fluid C) were tested using the Micropitting Test (DIN3990-16, formerly known as Micropitting FVA 54/7).

Fluid A was an industrial gear oil containing a commercial industrial gear lubricant additive. The commercial industrial gear lubricant additive includes an extreme pressure agent, antiwear compounds containing phosphorus (dibutyl thiophosphate amine salt and 2-ethylhexyl acid phosphate), and a succinimide.

Fluid B was an industrial gear oil containing the same commercial industrial gear lubricant additive with the addition of dimethyl octadecyl phosphonate.

Fluid C was an industrial gear oil containing the same commercial industrial gear lubricant additive with the addition of a friction modifier compound described herein (dibutyl octadecyl phosphonate).

The results of the Micropitting Test are presented in Table 2, Table 3, and Table 4. Change in Profiled Deviation and Change in Micropitting calculations are based on data from the Micropitting Test and the following limits were set by Flender and other Industrial OEMs.
a. No pitting in the first LS ("load stage") 10 run or in the LS 8 run of the endurance phase.
b. Second LS 10 run must have started in the endurance phase.
c. Pitting can occur in the second LS 10 run.
d. Change in Profile Deviation ("PD") must be less than 2 microns. Change in PD refers to the Grade f_{fg} endurance test and is calculated in microns using the following equation: ([ffg total after endurance test [µm]] - ffg after LS8 endurance test [µm]]) / Number of LS 10-steps endurance test.
e. Change in Micropitting must be less than 5%. Change in Micropitting refers to the Grade GF endurance test and is calculated in percent using the following equation: ([GFtotal after endurance test [%]] - GFafter LS8 endurance test [%]]) / Number of LS 10-steps endurance test

**TABLE 2**

| Profile Deviation Results | | | |
|---|---|---|---|
| | f_{fg total} after endurance test [µm]: | f_{fg after LS8} endurance test [µm]: | Number of LS 10-steps endurance test |
| Fluid A | 13.7 | 11 | 4 |
| Fluid B | 11.8 | 8.3 | 2 |
| Fluid C | 11.5 | 10.5 | 5 |

**TABLE 3**

| Micropitting Results | | | |
|---|---|---|---|
| | GFₜₒₜₐₗ after endurance test [µm]: | GF_{after LS8} endurance test [µm]: | Number of LS10-steps endurance test |
| Fluid A | 50 | 34 | 4 |
| Fluid B | 15 | 13 | 2 |
| Fluid C | 26 | 19 | 5 |

**TABLE 4**

| Calculated Change in Profile Deviation and Micropitting | | |
|---|---|---|
| | Change in Profile Deviation [µm] | Change in Micropitting [%] |
| Passing Criteria | ≤ 2 | ≤ 5 |
| Fluid A | 0.7 | 4.0 |
| Fluid B | 1.8 | 1.0 |
| Fluid C | 0.2 | 1.4 |

Each of the three fluids satisfied [a, b, and c] the results for d and e are in Tables 2, 3, and 4 above. While each of the three fluids met the limits set by Flender and other Industrial OEMs, the results in Table 4 show that the introduction of dimethyl octadecyl phosphonate in Fluid B and dibutyl octadecyl phosphonate in Fluid C both show improved performance in the Micropitting Test compared to Fluid A.

The results of Example 2 viewed in combination with the results of Example 1 indicate the surprising result that introducing a friction modifier compound described herein, such as dibutyl octadecyl phosphonate, into a lubricating composition not only maintains, or otherwise improves, friction performance and micropitting performance, but also improves wear performance where similar friction modifiers, such as dimethyl octadecyl phosphonate, can deteriorate performance in wear.

## Claims

1. A lubricant additive composition comprising
a) a friction modifier compound of formula (I): 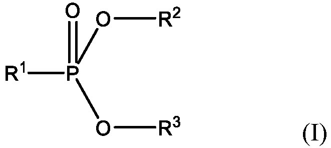 wherein
R¹ is straight, branched, saturated, or unsaturated C₆-C₂₄ hydrocarbyl;
R² is an optionally substituted C₂-C₈ hydrocarbyl, optionally substituted phenyl, or optionally substituted ethyl; and
R³ is hydrogen, an optionally substituted C₂-C₈ hydrocarbyl, optionally substituted phenyl, or optionally substituted ethyl; and
b) an antiwear compound;
wherein the antiwear compound is a phosphorus containing compound of formula (II): 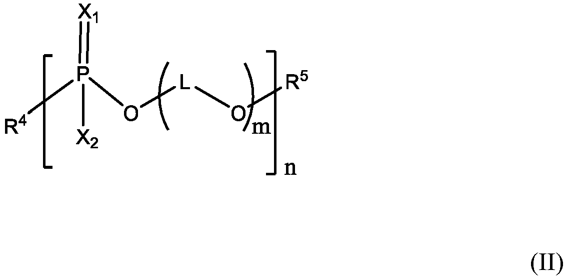
or a tribologically acceptable salt thereof,
wherein:
each X₁ is independently oxygen (O) or sulfur (S);
each X₂ is independently -OR", -OH, -SR", -SR‴C(O)OH, and -SH;
R⁴ is -OR", -OH, or H;
R⁵ is -R";
each R" is independently a C₁ to C₁₈ hydrocarbyl chain;
each R‴ is independently a C₁ to C₃ branched or linear alkyl chain;
n is 1, 2, or 3;
m is 0 when n is 1;
m is 1 when n is 2 or 3; and
L is a linker selected from the divalent group consisting of acyclic C₁-C₅ hydrocarbon and cyclic C₃-C₁₀ hydrocarbon.

2. The lubricant additive composition of claim 1, wherein each of R² and R³ is independently ethyl, optionally substituted phenyl, or a linear, branched or cyclic C₃-C₄ alkyl.

3. The lubricant additive composition of claim 1, wherein R¹ is straight C₁₆-C₁₉ hydrocarbyl.

4. The lubricant additive composition of claim 1, wherein the antiwear compound is a phosphorus-containing compound selected from the group consisting of a phosphate, a thiophosphate, and a dithiophosphate.

5. The lubricant additive composition of claim 1, wherein
the friction modifier is a compound selected from the group consisting of diethyl octadecylphosphonate, dipropyl octadecylphosphonate, dibutyl octadecylphosphonate, diisopropyl octadecylphosphonate, and diphenyl octadecylphosphonate; and
the antiwear compound is a phosphorous containing compound.

6. The lubricant additive composition of claim 1, wherein the friction modifier is dibutyl octadecylphosphonate.

7. The lubricant additive composition of claim 1, further comprising a solubility enhancer.

8. A lubricant composition comprising:
a) a base oil or a grease prepared therefrom; and
b) a minor amount of the lubricant additive composition of claim 1,
wherein the base oil is a major amount of the composition.

9. A method of lubricating moving metal surfaces of a machine part, comprising lubricating the surfaces with a lubricant composition of claim 8.

10. The method of claim 9, wherein the machine part is selected from one or more of an industrial gear, a windturbine gear, an axle, a differential, an engine, a crankshaft, a transmission, a clutch, a hydraulic apparatus, a slideway apparatus, and a turbine.

11. The method of claim 9, wherein antiwear performance is maintained in an aged lubricant composition relative to a baseline, fresh lubricant composition when tested according to ASTM D4172.

12. The method of 9, wherein antiwear performance is improved relative to a lubricant composition comprising an friction modifier compound other than a friction modifier compound of formula (I): 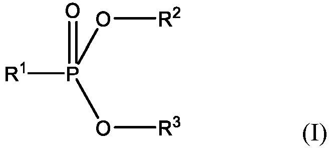 wherein
R¹ is straight, branched, saturated, or unsaturated C₆-C₂₄ hydrocarbyl;
R² is an optionally substituted C₂-C₈ hydrocarbyl, optionally substituted phenyl, or optionally substituted ethyl; and
R³ is hydrogen, an optionally substituted C₂-C₈ hydrocarbyl, optionally substituted phenyl, or optionally substituted ethyl.

## Patentansprüche

1. Schmierstoffadditivzusammensetzung, umfassend
a) eine Reibungsmindererverbindung von Formel (I): 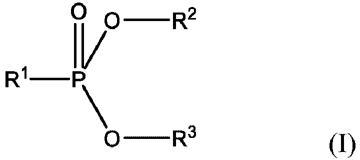 wobei
R¹ gerades, verzweigts, gesättigtes oder ungesättigtes C₆-C₂₄-Hydrocarbyl ist;
R² ein optional substituiertes C₂-C₈-Hydrocarbyl, optional substituiertes Phenyl oder optional substituiertes Ethyl ist; und
R³ Wasserstoff, ein optional substituiertes C₂-C₈-Hydrocarbyl, optional substituiertes Phenyl oder optional substituiertes Ethyl ist; und
b) eine Verschleißschutzverbindung;
wobei die Verschleißschutzverbindung eine phosphorhaltige Verbindung von Formel (II) ist: 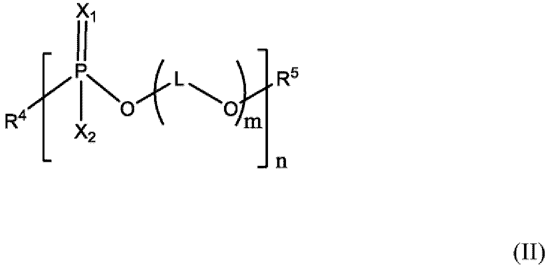
oder ein tribologisch verträgliches Salz davon,
wobei:
jedes X₁ unabhängig Sauerstoff (O) oder Schwefel (S) ist;
jedes X₂ unabhängig -OR", -OH, -SR", -SR‴C(O)OH und -SH ist;
R⁴ -OR", -OH oder H ist;
R⁵ -R" ist;
wobei jedes R" unabhängig eine C₁ bis C₁₈-Hydrocarbylkette ist;
jedes R‴ unabhängig eine C₁ bis C₃ verzweigte oder lineare Alkylkette ist; n 1, 2 oder 3 ist;
m 0 ist, wenn n 1 ist;
m 1 ist, wenn n 2 oder 3 ist; und
L ein Verknüpfer ist, der aus der zweiwertigen Gruppe ausgewählt ist, bestehend aus azyklischem C₁-C₅-Kohlenwasserstoff und zyklischem C₃-C₁₀-Kohlenwasserstoff.

2. Schmierstoffadditivzusammensetzung nach Anspruch 1, wobei jedes von R² und R³ unabhängig Ethyl, optional substituiertes Phenyl oder ein lineares, verzweigtes oder zyklisches C₃-C₄-Alkyl ist.

3. Schmierstoffadditivzusammensetzung nach Anspruch 1, wobei R¹ gerades C₁₆-C₁₉-Hydrocarbyl ist.

4. Schmierstoffadditivzusammensetzung nach Anspruch 1, wobei die Verschleißschutzverbindung eine phosphorhaltige Verbindung ist, die aus der Gruppe ausgewählt ist, bestehend aus einem Phosphat, einem Thiophosphat und einem Dithiophosphat.

5. Schmierstoffadditivzusammensetzung nach Anspruch 1, wobei
der Reibungsminderer eine Verbindung ist, die aus der Gruppe ausgewählt ist, bestehend aus Diethyloctadecylphosphonat,
Dipropyloctadecylphosphonat, Dibutyloctadecylphosphonat, Diisopropyloctadecylphosphonat und Diphenyloctadecylphosphonat; und
Verschleißschutzverbindung eine phosphorhaltige Verbindung ist.

6. Schmierstoffadditivzusammensetzung nach Anspruch 1, wobei
der Reibungsminderer Dibutyloctadecylphosphonat ist.

7. Schmierstoffadditivzusammensetzung nach Anspruch 1, ferner umfassend einen Löslichkeitsbeschleuniger.

8. Schmierstoffzusammensetzung, umfassend:
a) ein Basisöl oder ein daraus hergestelltes Fett; und
b) eine geringe Menge der Schmierstoffadditivzusammensetzung nach Anspruch 1,
wobei das Basisöl eine größere Menge der Zusammensetzung ist.

9. Verfahren zum Schmieren von sich bewegenden Metalloberflächen eines Maschinenteils, umfassend ein Schmieren der Oberflächen mit einer Schmierstoffzusammensetzung nach Anspruch 8.

10. Verfahren nach Anspruch 9, wobei das Maschinenteil aus einem oder mehreren ausgewählt ist von einem Industriegetriebe, einem Windturbinengetriebe, einer Achse, einem Differentialgetriebe, einem Motor, einer Kurbelwelle, einem Getriebe, einer Kupplung, einer Hydraulikvorrichtung, einer Gleitbahnvorrichtung und einer Turbine.

11. Verfahren nach Anspruch 9, wobei die Verschleißschutzleistung bei einer gealterten Schmierstoffzusammensetzung bezüglich einer frischen Schmierstoffzusammensetzung auf einem Ausgangspunkt bei Prüfung gemäß ASTM D4172 erhalten bleibt.

12. Verfahren nach 9, wobei die Verschleißschutzleistung bezüglich einer Schmierstoffzusammensetzung, umfassend eine andere Reibungsmindererverbindung als eine Reibungsmindererverbindung von Formel (I), verbessert ist: 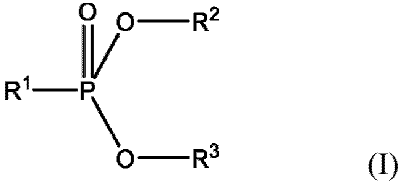 wobei
R¹ gerades, verzweigts, gesättigtes oder ungesättigtes C₆-C₂₄-Hydrocarbyl ist;
R² ein optional substituiertes C₂-C₈-Hydrocarbyl, optional substituiertes Phenyl oder optional substituiertes Ethyl ist; und
R³ Wasserstoff, ein optional substituiertes C₂-C₈-Hydrocarbyl, optional substituiertes Phenyl oder optional substituiertes Ethyl ist.

## Revendications

1. Composition d'additif de lubrifiant comprenant
a) un composé modificateur de friction de formule (I) : 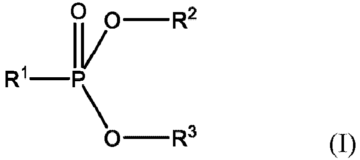 dans laquelle
R¹ est un hydrocarbyle en C₆ à C₂₄ linéaire, ramifié, saturé ou insaturé ;
R² est un hydrocarbyle en C₂ à C₈ facultativement substitué, un phényle facultativement substitué ou un éthyle facultativement substitué ; et
R³ est hydrogène, un hydrocarbyle en C₂ à C₈ facultativement substitué, un phényle facultativement substitué ou un éthyle facultativement substitué ; et
b) un composé anti-usure ;
dans laquelle le composé anti-usure est un composé contenant du phosphore de formule (II) : 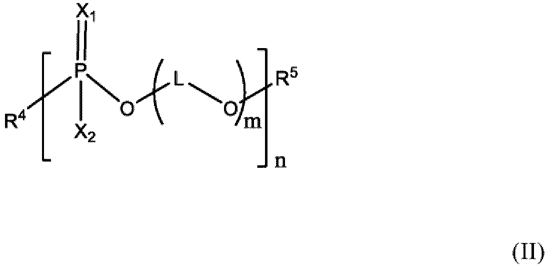
ou un sel tribologiquement acceptable de celui-ci,
dans laquelle :
chaque X₁ est indépendamment oxygène (O) ou soufre (S) ;
chaque X₂ est indépendamment -OR", -OH, -SR", -SR‴C(O)OH et -SH ;
R⁴ est -OR", -OH ou H ;
R⁵ est -R" ;
chaque R" est indépendamment une chaîne hydrocarbyle en C₁ à C₁₈ ;
chaque R"' est indépendamment une chaîne alkyle ramifiée ou linéaire en C₁ à C₃ ;
n vaut 1, 2 ou 3 ;
m vaut 0 lorsque n vaut 1 ;
m vaut 1 lorsque n vaut 2 ou 3 ; et
L est un lieur choisi parmi le groupe divalent constitué par hydrocarbure en C₁ à C₅ acyclique et hydrocarbure en C₃ à C₁₀ cyclique.

2. Composition d'additif de lubrifiant selon la revendication 1, dans laquelle chacun parmi R² et R³ est indépendamment éthyle, phényle facultativement substitué ou un alkyle en C₃ à C₄ linéaire, ramifié ou cyclique.

3. Composition d'additif de lubrifiant selon la revendication 1, dans laquelle R¹ est un hydrocarbyle en C₁₆ à C₁₉ linéaire.

4. Composition d'additif de lubrifiant selon la revendication 1, dans laquelle le composé anti-usure est un composé contenant du phosphore choisi dans le groupe constitué par un phosphate, un thiophosphate et un dithiophosphate.

5. Composition d'additif de lubrifiant selon la revendication 1, dans laquelle
le modificateur de friction est un composé choisi dans le groupe constitué par octadécylphosphonate de diéthyle, octadécylphosphonate de dipropyle, octadécylphosphonate de dibutyle, octadécylphosphonate de diisopropyle et octadécylphosphonate de diphényle ; et
le composé anti-usure est un composé contenant du phosphore.

6. Composition d'additif de lubrifiant selon la revendication 1, dans laquelle
le modificateur de friction est octadécylphosphonate de dibutyle.

7. Composition d'additif de lubrifiant selon la revendication 1, comprenant en outre un agent améliorant la solubilité.

8. Composition lubrifiante comprenant :
a) une huile de base ou une graisse préparée à partir de celle-ci ; et
b) une quantité mineure de la composition d'additif de lubrifiant selon la revendication 1,
dans laquelle l'huile de base est une quantité majeure de la composition.

9. Procédé de lubrification de surfaces mobiles en métal d'une pièce de machine, comprenant la lubrification des surfaces avec une composition lubrifiante selon la revendication 8.

10. Procédé selon la revendication 9, dans lequel la pièce de machine est choisie parmi un ou plusieurs parmi un engrenage industriel, un engrenage d'éolienne, un essieu, un différentiel, un moteur, un vilebrequin, une transmission, un embrayage, un appareil hydraulique, un appareil à glissière et une turbine.

11. Procédé selon la revendication 9, dans lequel la performance anti-usure est maintenue dans une composition lubrifiante vieillie par rapport à une composition lubrifiante fraîche de ligne de base, lorsqu'on teste selon ASTM D4172.

12. Procédé selon 9, dans lequel la performance anti-usure est améliorée par rapport à une composition lubrifiante comprenant un composé modificateur de friction autre qu'un composé modificateur de friction de formule (I) : 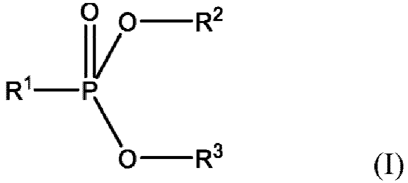 dans lequel
R¹ est un hydrocarbyle en C₆ à C₂₄ linéaire, ramifié, saturé ou insaturé ;
R² est un hydrocarbyle en C₂ à C₈ facultativement substitué, un phényle facultativement substitué ou un éthyle facultativement substitué ; et
R³ est hydrogène, un hydrocarbyle en C₂ à C₈ facultativement substitué, un phényle facultativement substitué ou un éthyle facultativement substitué.
